# EUROPÄISCHE PATENTSCHRIFT

(11) **EP 1 283 164 B1**
(45) Veröffentlichungstag und Bekanntmachung des Hinweises auf die Patenterteilung: **18.08.2004**
(21) Anmeldenummer: 02015965.3
(22) Anmeldetag: 18.07.2002
(51) Int. Cl.: B64C 37/02, B64D 25/12, B64C 39/02, B64C 30/00, B64G 1/14

(54) **Vorrichtung zum Überschalltransport**
Supersonic transport device
Dispositif pour le transport supersonique

(30) Priorität: 06.08.2001 DE 10137806
(43) Veröffentlichungstag der Anmeldung: 12.02.2003
(73) Patentinhaber: EADS Space Transportation GmbH, 28199 Bremen (DE)
(72) Erfinder: van der Velden, Alexander, Atlanta, GA 30329 (US); Stockfleth, Holger, 27809 Lemwerder (DE)
(74) Vertreter: Hansmann, Dierk, Dipl.-Ing.

(56) Entgegenhaltungen:
- EP-A- 0 264 030
- DE-A- 2 306 811
- DE-A- 2 334 194
- US-A- 6 102 332
- US-B1- 6 257 527

## Beschreibung

Die Erfindung bezieht sich auf eine Vorrichtung zum Überschalltransport von Passagieren mit einem als Kampfflugzeug ausgebildeten Hochleistungsflugzeug mit einem verbundenen Modul mit Versorgungseinrichtungen.

Es ist bekannt, daß Hochleistungs-Militärflugzeuge für kommerzielle Anwendungen wie Überschallflüge, Kunstflug und Höhenflüge, an die Grenze zum Weltall für die Allgemeinheit durchzuführen. Die Kosten derartiger Flüge sind hoch, da nur ein Passagier an Bord eines solchen Fluges aufgenommen wird und dieser muß zudem auf dem Rücksitz mit sehr begrenzter Aussicht sitzen. Zuvor muß ein kommerzieller Passagier außerdem für Militärflugzeuge ein Training zur Nutzung der Schleudersitze absolvieren. Der Ausstieg im Gefahrenfall in großen Höhen mit hohen Geschwindigkeiten, ist als äußerst gefährlich einzuordnen.

Nach der US-A-6257 527 ist eine Anordnung mit einem verbundenen Modul bekannt, wobei dieses Modul als flugfähiges Transportmittel zum Weiterflug ausgebildet ist und somit entsprechende Antriebe und Steuermittel für einen Piloten aufweist, um ein Zielgebiet nach Abtrennung vom Trägerfahrzeug selbsttätig anzusteuern.

Weiterhin ist nach der US-A-6102 332 bekannt, einzelne Passagierkabinen im Flughafen zu beladen und Passagiere aufzunehmen, um dann an ein entsprechendes Fluggerüst mit Antrieben und erforderlichen Vorrichtungen eines Flugzeuges anzuhängen, um eine Vielzahl von Passagieren aufzunehmen und eine schnelle Umrüstung vorzunehmen.

Die Aufgabe der Erfindung ist es, unter Ausnutzung von vorhandenen Antriebseinheiten eine Zusatzbestückung für einen Raumfahrttourismus und Überschalltransport mit geringen Aufwendungen zu ermöglichen.

Die Lösung dieser Aufgabe erfolgt erfindungsgemäß dadurch, daß das Modul in Form eines Passagiermoduls als autarke Zusatzkabine für Passagiere mit dem Kampfflugzeug als Nutzlastbehälter zur Kapazitätsvergrößerung ausgebildet ist und das Passagiermodul ohne Flugfähigkeit antriebslos und ohne Steuereinrichtungen ausschließlich zum Zielflug mit dem Kampfflugzeug dient.

Hierdurch wird auf einfache Weise ein kommerzieller Passagiertransport mit geringen Kosten ermöglicht.

Um die Kontrollfähigkeit in großer Höhe zu lösen, wird vorgeschlagen, daß das Kampfflugzeug zusätzlich mit Lageregeldüsen und/oder einem Raketenbooster versehen ist.

Die Nutzung der Düsen - wie bei Raumfahrzeugen - gewährleistet, die mögliche Einsatzhöhe um bis zu 10 km zu erhöhen. Das Düsenlageregelungssystem wird dabei benötigt, die Lage des Luftfahrzeuges in der ballistischen Fluglage kontrollieren zu können. Eine weitere Erhöhung der Gipfelhöhe auf ungefähr 50 km kann durch die Raketenbooster erzielt werden.

Ferner wird zur Erhöhung der Sicherheit vorgeschlagen, daß das Passagiermodul über Trennelemente gegenüber dem Kampfflugzeug lösbar gehaltert ist und über ein zugeordnetes Fallschirmsystem vom Kampfflugzeug trennbar und absetzbar ist.

Hierdurch ist es möglich, im Notfall das Passagiermodul durch einen Fallschirm landen zu lassen und der Passagier wird nicht den Auswirkungen des niedrigen Drucks und Temperatur in großer Höhe ausgesetzt.

In der Zeichnung ist ein Ausführungsbeispiel der Erfindung schematisch dargestellt. Es zeigen:
- Fig. 1: ein Kampfflugzeug mit einem aufgesetzten Passagiermodul;
- Fig. 2: eine Frontansicht zu Figur 1;
- Fig. 3: schematisch dargestellte Flugkurven für die maximale Höhe bei unterschiedlichem Regelungssystem und Hilfsantrieben;
- Fig. 4: ein Passagiermodul in vergrößerter Darstellung; und
- Fig. 5: einen Ablaufplan für eine Bergung eines Passagiermoduls mit einem Fallschirm.

Das dargestellte Kampfflugzeug 1 trägt auf seiner Oberseite ein Passagiermodul 2, das für mehrere Passagiere ausgebildet ist. Im vorderen Bereich des Flugzeuges sind Lageregelungsdüsen 3 angeordnet. Zusätzlich ist das Flugzeug 1 mit Flüssig- oder Feststoffbooster 4 ausgerüstet.

Das dargestellte Passagiermodul 2 ist mit Sitzen und großen Fenstern 5 ausgestattet und besitzt eine Vielzahl von Versorgungseinrichtungen 6, die somit ein autarkes Modul gewährleisten. Gleichzeitig sind als Rettungssysteme ein Hauptfallschirm 7 und ein Hilfsfallschirm 8 angeordnet. Das Passagiermodul 2 ist über ein entsprechendes Trennsystem 9 und 10 mit dem Flugzeug 1 verbunden. Dieses Trennsystem ist durch pyrotechnische Trennelemente gebildet.

Für eine gesonderte Landung des Passagiermoduls 2 über ein Fallschirmabsetzsystem sind zusätzlich im Bodenbereich Schwimmhilfen bzw. Airbags 11 angeordnet.

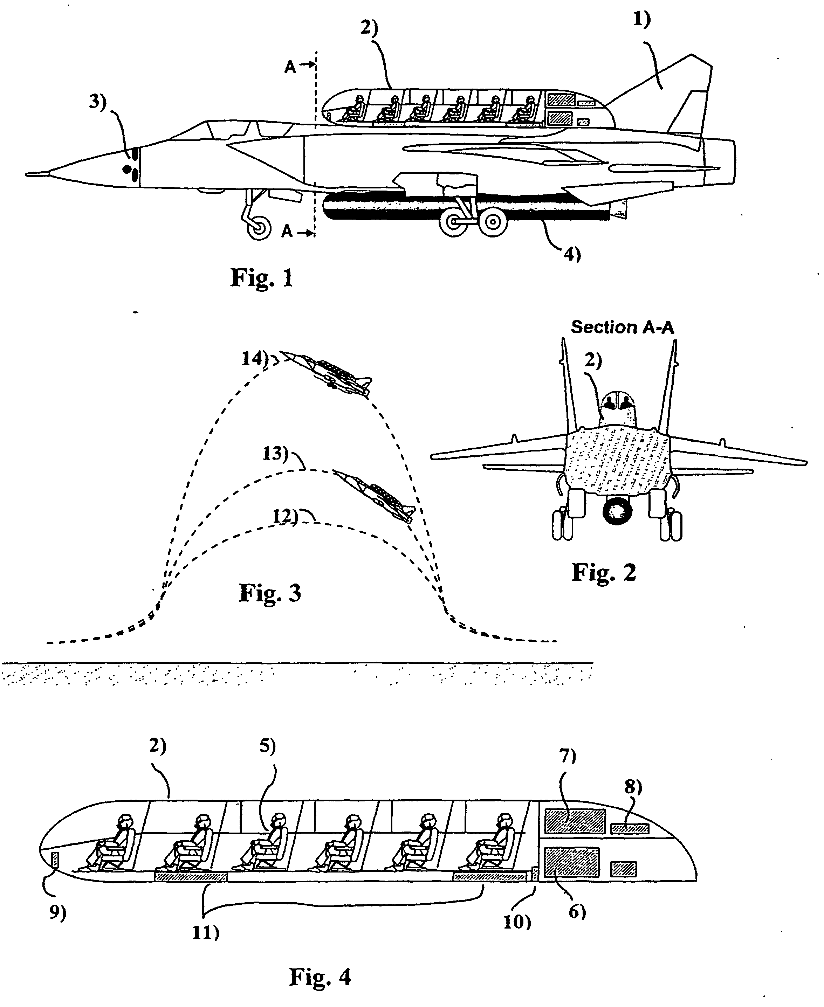

In der schematischen Darstellung gemäß Figur 3 sind Flugbahnen dargestellt, wobei eine Flugbahn 12 die maximale Höhe ohne Lageregelungssystem zeigt. Mit der Flugbahn 13 ist die maximale Höhe mit Lageregelungssystemen angegeben und 14 bezeichnet die Flugbahn mit maximaler Höhe mit Lageregelungssystem und Hilfsantrieb (Booster).

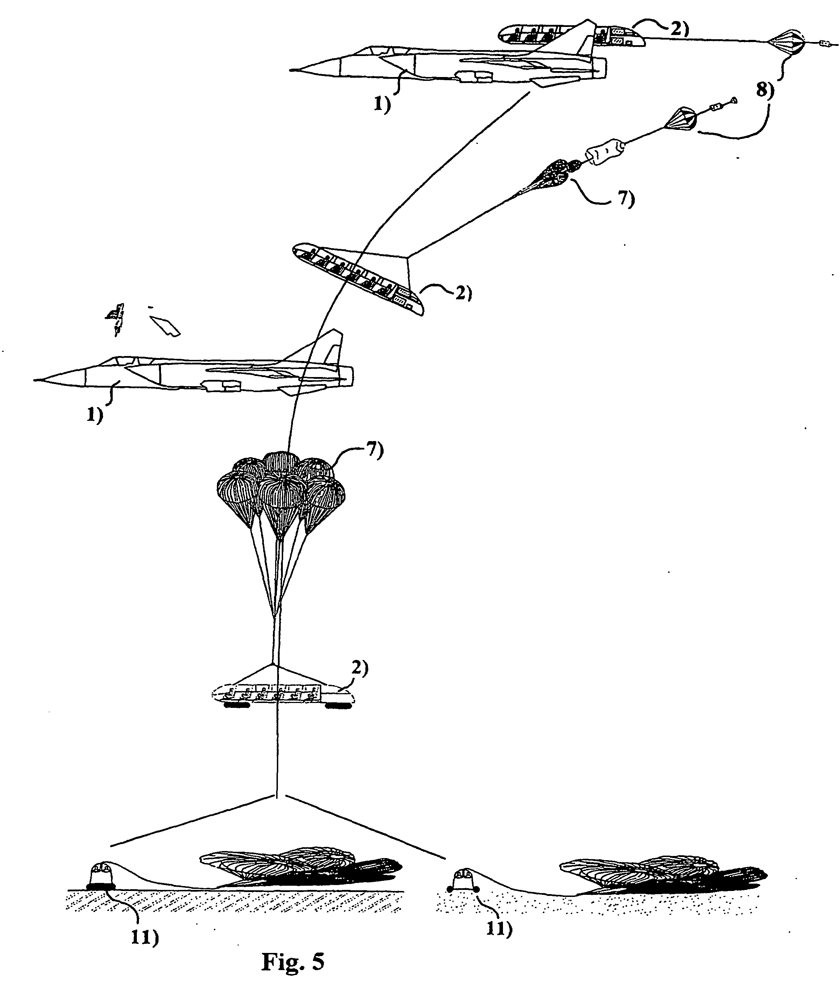

In Figur 5 ist ein Ablauf für eine Notfallsituation dargestellt, wobei nach Abschalten des Jetantriebes der Auswurf eines Hilfs-Fallschirms 8 gezeigt ist. Anschließend erfolgt die Abtrennung des Passagiermoduls 2 und der Pilotenausstieg mit Schleudersitz. Nach Entfalten eines Hauptfallschirmes 7 wird das Passagiermodul 2 zur Erde geführt. Hierbei entfaltet sich bei einer Landlandung ein Airbag 11 bzw. eine Schwimmhilfe 11 bei einer Wasserlandung.

## Patentansprüche

1. Vorrichtung zum Überschalltransport von Passagieren mit einem als Kampfflugzeug ausgebildeten Hochleistungsflugzeug mit einem verbundenen Modul mit versorgungseinrichtungen, **dadurch gekennzeichnet, daß** das Modul in Form eines Passagiermoduls (2) als autarke Zusatzkabine für Passagiere mit dem Kampfflugzeug (1) als Nutzlastbehälter zur Kapazitätsvergrößerung ausgebildet ist und das Passagiermodul (2) ohne Flugfähigkeit antriebslos und ohne Steuereinrichtungen ausschließlich zum Zielflug mit dem Kampfflugzeug dient.

2. Vorrichtung nach Anspruch 1, **dadurch gekennzeichnet, daß** das Kampfflugzeug (1) zusätzlich mit Lageregeldüsen (3) und/oder einem Raketenbooster (4) versehen ist.

3. Vorrichtung nach Anspruch 1 oder 2, **dadurch gekennzeichnet, daß** das Passagiermodul (2) über Trennelemente (9, 10) gegenüber dem Kampfflugzeug (1) lösbar gehaltert ist und über ein zugeordnetes Fallschirmsystem (7, 8) vom Kampfflugzeug (1) trennbar und absetzbar ist.

4. Vorrichtung nach einem der Ansprüche 1 bis 3, **dadurch gekennzeichnet, daß** das absetzbare Passagiermodul (2) ausfahrbare Airbags und/oder Schwimmhilfen (11) aufweist.

5. Vorrichtung nach einem der Ansprüche 1 bis 4, **dadurch gekennzeichnet, daß** das Passagiermodul (2) mit dem Kampfflugzeug (1) über pyrotechnische Trennelemente (9, 10) verbunden ist.

## Claims

1. Device for the supersonic transport of passengers with a high-powered aircraft constructed as a combat aircraft with a connected module with supply apparatuses, **characterised in that** the module is constructed in the form of a passenger module (2) as a self-sufficient additional cabin for passengers with the combat aircraft (1) as a payload container for the purpose of increasing capacity, and said passenger module (2), without the capacity for flight, without propulsion and without control apparatuses, serves exclusively for homing with the combat aircraft.

2. Device according to claim 1, **characterised in that** the combat aircraft (1) is additionally provided with attitude-regulating nozzles (3) and/or a rocket booster (4).

3. Device according to claim 1 or 2, **characterised in that** the passenger module (2) is mounted detachably in relation to the combat aircraft (1) via separating elements (9, 10), and can be separated from the combat aircraft (1) and set down via an associated parachute system (7, 8).

4. Device according to one of claims 1 to 3, **characterised in that** the passenger module (2) that can be set down has extendable airbags and/or flotation aids (11).

5. Device according to one of claims 1 to 4, **characterised in that** the passenger module (2) is connected to the combat aircraft (1) via pyrotechnic separating elements (9, 10).

## Revendications

1. Dispositif pour le transport supersonique de passagers avec un avion ultraperformant conçu comme un avion de combat et doté d'un module raccordé à des installations d'approvisionnement, ledit dispositif étant **caractérisé en ce que** le module en forme de module de passagers (2) a été conçu sous la forme d'une cabine autarcique supplémentaire pour passagers avec l'avion de combat (1) comme conteneur, en vue d'augmenter la capacité et **en ce que** le module de passagers (2) sert exclusivement au vol d'approche avec l'avion de combat, sans capacité de vol, sans entraînement et sans dispositifs de commande.

2. Dispositif selon la revendication 1, **caractérisé en ce que** l'avion de combat (1) est également doté de tuyères de réglage de la position (3) et / ou d'un accélérateur à fusée (4).

3. Dispositif selon la revendication 1 ou 2, **caractérisé en ce que** le module de passagers (2) est fixé de façon amovible à l'avion de combat (1), par l'intermédiaire d'éléments séparateurs, et peut être séparé et détaché de l'avion de combat (1), par l'intermédiaire d'un système de parachute (7, 8) raccordé.

4. Dispositif selon une des revendications 1 à 3, **caractérisé en ce que** le module de passagers décalable (2) présente des air bags et / ou auxiliaires de natation (11).

5. Dispositif selon une des revendications 1 à 4, **caractérisé en ce que** le module de passagers (2) est raccordé à l'avion de combat (1) par l'intermédiaire d'éléments séparateurs pyrotechniques (9, 10).
